# EUROPÄISCHE PATENTSCHRIFT

(11) **EP 1 982 433 B1**
(45) Veröffentlichungstag und Bekanntmachung des Hinweises auf die Patenterteilung: **23.04.2014**
(21) Anmeldenummer: 07702940.3
(22) Anmeldetag: 23.01.2007
(51) Int. Cl.: H04B 3/54, H04J 3/00

(54) **ANLAGE, VORRICHTUNG UND VERFAHREN**
SYSTEM, DEVICE AND METHOD
INSTALLATION, DISPOSITIF ET PROCÉDÉ

(30) Priorität: 31.01.2006 DE 102006004700
(43) Veröffentlichungstag der Anmeldung: 22.10.2008
(60) Teilanmeldung: 12003630.6
(73) Patentinhaber: SEW-EURODRIVE GmbH & Co. KG, 76646 Bruchsal (DE)
(72) Erfinder: SCHÖPFER, Claus, 69168 Wiesloch (DE); SCHMIDT, Josef, D-76676 Graben-Neudorf (DE); PODBIELSKI, Leobald, 76199 Karlsruhe (DE)
(86) Internationale Anmeldenummer: PCT/EP2007/000527
(87) Internationale Veröffentlichungsnummer: WO 2007/087996

(56) Entgegenhaltungen:
- WO-A-01/43304
- JP-A- 56 158 557
- JP-A- 57 143 941
- US-A- 4 535 401
- US-A- 4 926 158
- US-A- 6 144 292

## Beschreibung

Die Erfindung betrifft eine Anlage, eine Vorrichtung und ein Verfahren.

Bussysteme, bei denen die Daten entsprechend dem ASI-Verfahren übertragbar sind, sind bekannt. Dabei wird zur Datenübertragung eine elektrische Leitung vorgesehen, die nur zur Datenübertragung verwendet wird.

Aufmodulation höherfrequenter Wechselströme auf elektrische Leistungs-Versorgungsleitungen derart, dass Leistungs- und Datensignal unabhängig voneinander übertragen werden, ist bekannt.

Aus der US 4 926 158 ist eine leistungsversorgte Kommunikationsverbindung bekannt, bei welcher Daten und Leistung durch eine zentrale Steuerung im Multiplex-Verfahren übertragen werden.

Aus der WO 01/43304 A1 sind ein System und ein Verfahren zur Übertragung und zum Empfang von Leistung und Daten unter Verwendung einer Übertragung im ZeitmultiplexBetrieb bekannt, bei welcher die Leistung durch eine gepulste Wellenform bereitgestellt wird, wobei die Daten über eine Pulsweiten-Modulation der Wellenform übertragen werden.

Aus der US 6 144 292 A ist ein Netzleitungs-Kommunikationsnetzwerk bekannt, bei welchem Zeit-, Frequenz- und/oder Code-Multiplexverfahren verwendet werden.

Der Erfindung liegt die Aufgabe zugrunde, die Fehlerrate bei der Datenübertragung zu reduzieren.

Erfindungsgemäß wird die Aufgabe bei der Anlage nach den in Anspruch 1 und bei dem Verfahrne nach den in Anspruch 11 angegebenen Merkmalen gelöst.

Wichtige Merkmale der Erfindung bei der Anlage sind in Anspruch 1 angegeben. Insbesondere wird somit vorgeschlagen, dass die Anlage oder Vorrichtung einen über eine Versorgungsleitung versorgten Verbraucher umfasst, wobei über die Versorgungsleitung elektrische Leistung und Daten übertragbar sind, wobei Leistungssignal und Datensignal abwechselnd übertragbar sind. Von Vorteil ist dabei, dass keine Störungen vom Leistungssignal während der Zeitdauer der Übertragung des Datensignals vorhanden sind. Somit treten weniger Fehler bei der Datenübertragung auf.

Wichtige Merkmale der Erfindung einer Anlage sind außerdem, dass eine Leistungsversorgung, insbesondere ein Leistungsversorgungssystem oder eine Leistungsversorgungseinheit, umfasst ist und eine oder mehrere über eine Versorgungsleitung versorgten Verbraucher, wobei die Verbraucher Mittel zur Kommunikation über die Versorgungsleitung umfassen und eine Schalteinheit vorgesehen ist zur Trennung der Versorgungsleitung von der Leistungsversorgung. Von Vorteil ist dabei, dass das von der Leistungsversorgung ausgesendete Leistungssignal unterbrochen werden kann, um die Versorgungsleitung für Datenübertragung nutzbar zu machen.

In einer vorteilhaften Weiterbildung verfügen die Verbraucher jeweils über einen Energiepuffer, der aus der Versorgungsleitung gespeist wird, insbesondere in Form eines Zwischenkreises eines Frequenzumrichters. Somit kann die Leistungsversorgung unterbrochen werden, ohne den Betrieb der Verbraucher zu beeinträchtigen. Handelt es sich bei dem Verbraucher um einen Frequenzumrichter, so sind als Energiepuffer vorteilhaft Glättungskondensatoren oder Pufferkondensatoren einsetzbar, wie sie im Zwischenkreis eines Umrichters Einsatz finden.

In einer vorteilhaften Weiterbildung ist die Größe des Energiepuffers so bemessen, dass die Versorgung der nachgeordneten Verbraucher für die Zeit der zeitabschnittsweisen Trennung des Leistungssignals sichergestellt ist. Somit kann das Leistungssignal über einen derart langen Zeitraum unterbrochen werden, dass genügend Zeit für Datenübertragung bereitgestellt ist.

In einer vorteilhaften Weiterbildung umfasst die Schalteinheit Mittel zur Erfassung der von der Leistungsversorgung an die Verbraucher momentan oder im zeitlichen Mittel innerhalb eines Zeitfensters übertragene Leistung, insbesondere durch Ermittlung des zeitlichen Verlaufs von Stromstärke und/oder Spannung in der Versorgungsleitung oder deren zeitlicher Mittelwerte und/oder durch Berechung des Leistungsverbrauchs anhand der von den Verbrauchern durchgeführten Verfahrensschritten und/oder Aktionen. Somit ist die Versorgungsleitung bestmöglich ausnutzbar zur Datenübertragung. Wenn beispielsweise der Verbraucher ein Umrichtermotor ist, der ein fahrerloses Transportsystem oder eine Einschienen-Hängebahn antreibt, so wird im Moment des Anfahrens viel Leistung benötigt, und es können nur unverzichtbare Daten übertragen werden, im Zeitabschnitten gleichförmiger Bewegung wird dagegen nur eine verringerte Leistung benötigt, und es sind komplexere oder umfangreichere Datenmengen, etwa Parametersätze oder Softwareänderungen, übertragbar.

In einer vorteilhaften Weiterbildung ist die Schalteinheit mit einer zentralen Kommunikationseinheit verbunden, insbesondere einem Master, wobei die zentrale Kommunikationseinheit Mittel zur Kommunikation über die Versorgungsleitung mit den Verbrauchern aufweist. Von Vorteil ist dabei, dass der Master die Kommunikation mit den Slaves steuern kann unter Berücksichtigung der Informationen über die Unterbrechung des Leistungssignals. Somit ist die Übertragung großer Datenmengen vom Master planbar und auf die breitstehenden Unterbrechungslücken verteilbar.

In einer vorteilhaften Weiterbildung ist der Verbraucher elektrisch, insbesondere galvanisch, verbunden mit den Versorgungsleitungen. Somit ist die Erfindung einsetzbar in konventionellen Anlagen, insbesondere industriellen Fertigungsanlagen, bei denen Verbraucher über Zuleitungen versorgt werden. Von Vorteil ist dabei weiter, dass ein drehstromversorgbarer Verbraucher oder ein einphasiger Verbraucher vorsehbar ist.

In einer vorteilhaften Weiterbildung sind die Versorgungsleitungen dreiphasig ausgeführt, wobei jeder Verbraucher zur Kommunikation mit jeder Phase verbunden ist. Somit sind die einzelnen Phasen zu verschiedenen Zeitpunkten durch das Schaltelement trennbar, und die Verbraucher müssen nicht während einer Datenübertragung über eine Phase vollständig von der Leistungsversorgung getrennt werden. Es ist somit eine kontinuierliche Datenübertragung oder zumindest eine Datenübertragung mit zeitlich kurzen Lücken zwischen den Datenpaketen realisierbar, indem zwischen den Phasen gewechselt wird.

In einer vorteilhaften Weiterbildung ist der Verbraucher induktiv versorgt von einer oder mehreren Versorgungsleitungen, wobei hierzu der Verbraucher eine Sekundärspule umfasst, die induktiv angekoppelt ist an mindestens eine Versorgungsleitung, insbesondere eine Versorgungsleitung, in welche ein mittelfrequenter Strom eingeprägt ist. Von Vorteil ist dabei, dass die Erfindung bei frei beweglichen Verbrauchern einsetzbar ist, wobei Schleppkabel oder Schleifkontakte verzichtbar sind. Von Vorteil ist weiter, dass bei einem System zur berührungslosen Versorgung von Verbrauchern, insbesondere bewegbar angeordneten Verbrauchern, die Datenübertragung von einer zentralen, Station zu dem jeweiligen Verbraucher ohne Zusatzleitungen über denselben Weg, also die Strecke übertragbar ist und darüber hinaus die Fehlerrate reduzierbar ist. Außerdem ist ein übliches Feldbusprotokoll, beispielsweise ASI, verwendbar.

In einer vorteilhaften Weiterbildung ist sekundärseitig eine Kapazität derart seriell oder parallel zur Sekundärspule angeordnet, dass die dazugehörige Resonanzfrequenz mit der Frequenz des Leistungssignals übereinstimmt. Von Vorteil ist dabei, dass die Leistungsübertragung an die Verbraucher über eine schwache Kopplung erfolgt, dass also der räumliche Abstand zwischen Primärleiter und Sekundärspule im cm-Bereich wählbar ist. Somit ist eine robuste, störunanfällige Versorgung beweglicher Verbraucher bereitgestellt, bei der die Erfindung einsetzbar ist.

In einer vorteilhaften Weiterbildung ist das Leistungssignal durch den zeitlichen Verlauf von Spannung, Stromstärke oder Leistung in der Versorgungsleitung bestimmt.

Bei einer vorteilhaften Ausgestaltung ist ein Schalter zum Abschalten, insbesondere zeitweisen Abschalten, des Leistungssignals vorgesehen, wobei das Datensignal auf die Versorgungsleitung nach dem Abschalten aufmoduliert ist. Von Vorteil ist dabei, dass die beiden Signale abwechselnd und nicht gleichzeitig übertragen werden auf einer einzigen elektrischen Leitung. Die Erfindung umfasst aber sehr wohl gleichzeitige Übertragung von Daten, wenn mehrere Versorgungsleitungen verwendet werden, wobei die Zeitintervalle für die Datenübertragung in den jeweiligen Leitungen aneinandergrenzen. Auf diese Weise kann durch Zusammenführen der Datenströme der einzelnen Phasen der Gesamtdatenstrom kontinuierlich übertragen werden.

In einer vorteilhaften Weiterbildung sind die Mittel zur Kommunikation der Verbraucher jeweils an die Sekundärspule angeschlossen. Von Vorteil ist dabei, dass weitere Spulen, insbesondere zur Abnahme des Datensignals, verzichtbar sind. Durch die zeitliche Trennung von Leistungssignal und Datensignal ist eine aufwändige Trennung, etwa durch Filter, verzichtbar. Die Verbraucher erfassen lediglich Zeitabschnitte, in denen im Primärleiter kein Strom fließt, als Signal für den Beginn einer Datenübertragung. Die Datenübertragung schließt vorzugsweise mit einem Übertragungserde-Signal ab. Somit ist eine kompakte Einheit zur Leistungsentnahme und Datenentnahme aus dem Primärleiter bereitgestellt.

Bei einer vorteilhaften Ausgestaltung ist bei verschwindendem Leistungssignal oder in Zeitabschnitten, in welchen die Amplitude des Leistungssignals kleiner als ein Schwellwert ist, ein Datensignal übertragbar. Insbesondere ist der Schwellwert kleiner als die Hälfte des Spitzenwertes des Leistungssignals der Versorgungsleitung. Von Vorteil ist dabei, dass die Fehlerrate gering ist, weil das Signal-Rauschverhältnis besser ist als bei bekannten Verfahren, bei denen auch über dem Schwellwert aufmoduliert wird zur Datenübertragung.

Bei einer vorteilhaften Ausgestaltung umfassen Mittel zur Filterung der Nutzdaten Mittel zum Amplitudenvergleich und/oder Frequenzvergleich. Von Vorteil ist dabei, dass bekannte Vorrichtungen verwendbar sind zur Herstellung der Erfindung.

Bei einer vorteilhaften Ausgestaltung sind die Daten entsprechend einem Feldbusübertragungsverfahren wie beispielsweise dem ASI-Verfahren übertragbar. Von Vorteil ist dabei, dass bekannte Verfahren einsetzbar sind und somit die Daten schnell und einfach übertragbar sind. Der Herstellungsaufwand ist somit klein.

Bei einer vorteilhaften Ausgestaltung ist als Koppelelement ein Phasenmultiplexer und/oder ein Phasendemultiplexer vorgesehen, mittels welchem ein unterbrechungsfreies Datenübertragen ausführbar wird. Von Vorteil ist dabei, dass eine kontinuierliche Datenübertragung bei einem mehrphasigen System ausführbar ist.

Wichtige Merkmale bei dem Verfahren zur Datenübertragung bei einer Anlage sind in Anspruch 11 angegeben. Insbesondere wird somit vorgeschlagen, dass über ein physikalisches Medium, insbesondere Versorgungsleitung, Leistungssignal und Datensignal nicht gleichzeitig übertragen werden. Von Vorteil ist dabei, dass weniger Störungen bei der Datenübertragung vorhanden sind.

Bei einer vorteilhaften Ausgestaltung wird das Leistungssignal zeitabschnittsweise abgeschaltet zur Übertragung des Datensignals. Insbesondere sind Leistungssignal und Datensignal derart synchronisiert, dass nur entweder ein Leistungssignal oder ein Datensignal übertragen wird. Von Vorteil ist dabei, dass die Fehlerrate verringert ist.

Wichtiges Merkmal des Verfahren zur Datenübertragung bei einer Anlage ist, dass über ein physikalisches Medium, insbesondere eine Versorgungsleitung, Leistungssignal und Datensignal abwechselnd übertragen werden.

In einer vorteilhaften Weiterbildung beträgt der maximale Wert der Stromstärke der Leistungssignale ein Vielfaches, insbesondere mehr als ein Zehnfaches, des maximalen Wertes der Stromstärke der Datensignale. Von Vorteil ist dabei, dass die Abstrahlung des Datensignals in Raumbereiche der Anlage verringerbar ist. Insbesondere ist die Auswerteelektronik für die Datensignale mit geringem Aufwand ausführbar, obwohl auf aufwändige Filter zur Abtrennung des Leistungssignal verzichtet wird.

In einer vorteilhaften Weiterbildung wird das Leistungssignal aus einer Konstantstromquelle gespeist. Von Vorteil ist dabei, dass eine Regulierung der zugeführten Leistung mittels Schwingungspaketsteuerung durchführbar ist.

In einer vorteilhaften Weiterbildung wird die von den Verbrauchern über die Versorgungsleitung bezogene Leistung bestimmt. Von Vorteil ist dabei, dass die Leistungsversorgung trennbar ist in Zeitabschnitten, in denen keine Leistung benötigt wird. Somit ist die Versorgungsleitung in diesen Zeiten nutzbar für Datenübertragung, und eine Verzerrung des Datensignal durch Übersteuerung, wie sie beispielsweise hervorgerufen durch ein gleichzeitig anliegendes Leistungssignal, vermieden wird.

In einer vorteilhaften Weiterbildung ist die Länge der Zeitabschnitte für Datensignale und/oder der Abstand zwischen den Zeitabschnitten für Datensignale durch die von den Verbrauchern momentan bezogene Leistung bestimmt. Somit ist vorteilhaft die verfügbare Übertragungskapazität der Versorgungsleitung für Datenübertragung nutzbar.

In einer vorteilhaften Weiterbildung beträgt die Länge der Zeitabschnitte ein Mindestmaß, wenn der Leistungsbedarf der Verbraucher über einem Schwellwert liegt, und ist größer als das Mindestmaß, wenn der Leistungsbedarf darunter liegt,
wobei das Mindestmaß durch die Zeitspanne bestimmt ist, innerhalb derer der Master einen vollen Kommunikationszyklus mit einem Verbraucher abwickeln kann. Somit ist sichergestellt, dass unbedingt notwendige Kommandos und/oder Daten, beispielsweise Sicherheitsabschaltungen, Informationen über das Erreichen eines Endpunkts einer Bewegung, Bewegungskommandos, an Verbraucher oder zwischen Verbrauchern ohne Verzögerung übermittelbar sind.

In einer vorteilhaften Weiterbildung ist zwischen dem Zeitabschnitt für Datensignale und dem sich jeweils anschließenden Zeitabschnitt für das Leistungssignal jeweils in regelmäßigen zeitlichen Abständen ein Zeitabschnitt vorgesehen, in dem weder Datensignale noch Leistungssignale vorgesehen sind, insbesondere zur Löschung von Lichtbögen in Anlagen mit berührungsloser Leistungsversorgung. Von Vorteil ist dabei, dass die Anlage sicher ist gegen das Ausbilden von Lichtbögen bei unvorhergesehenen Leitungsunterbrechungen, beispielsweise Leitungsbrüchen.

In einer vorteilhaften Weiterbildung werden die Zeitabschnitte für Datensignale durch Pulse auf der Versorgungsleitung gekennzeichnet. Von Vorteil ist dabei, dass die Verbraucher ihre Kommunikation synchronisieren können und dass die Zeitabschnitte für Datensignale leichter erkennbar sind.

In einer vorteilhaften Weiterbildung enthalten die Pulse zur Kennzeichnung der Zeitabschnitte für Datensignale Informationen, über welche Zeitdauer sich der gekennzeichnete Zeitabschnitt erstreckt, insbesondere durch Angabe des Vielfachen eines Mindestmaßes. Von Vorteil ist dabei, dass die Verbraucher ihre Kommunikation, insbesondere die Aufteilung von zu übertragenden Daten auf Zeitabschnitte, planen können.

In einer vorteilhaften Weiterbildung umfasst die Versorgungsleitung mehrere Phasen, die jeweils zu unterschiedlichen Zeitpunkten derart von der Leistungsversorgung getrennt werden, dass sich die jeweiligen Zeitabschnitte für Datensignale zur Bildung eines kontinuierlichen Kommunikationskanals zeitlich aneinander reihen. Somit ist eine Datenübertragung ohne Verzögerung, insbesondere in Echtzeit, durchführbar.

Bei einer vorteilhaften Ausgestaltung sind bei einer dreiphasigen Versorgungsleitung, insbesondere Drehstromleitung, die Leistungssignale der drei Phasen um 120° gegeneinander verschoben, wobei im Bereich jedes Nulldurchgangs für ein Zeitintervall das jeweilige Leistungssignal abgeschaltet wird. Von Vorteil ist dabei, dass die Gesamt-Datenübertragung nicht nur in dem auf eine Phase bezogenen kurzen Zeitintervall sondern über längere Zeiten die Datenübertragung mit der geringen Fehlerrate ausführbar ist.

Bei einer vorteilhaften Ausgestaltung beträgt das Zeitintervall 60°, also 1/6 der Periodendauer des Leistungssignals, insbesondere zur Ermöglichung einer unterbrechungsfreien Datenübertragung. Von Vorteil ist dabei, dass bei geschickter Wahl der Intervalle eine kontinuierliche Datenübertragung ausführbar ist. Die 60° können beispielsweise symmetrisch um den Nullpunkt herum angeordnet werden. Alternativ können die 60° am Nullpunkt beginnend angeordnet sein, wodurch eine Phasenanschnittssteuerung des Leistungssignals besonders einfach einsetzbar ist.

Bei anderer Anzahl von Phasen sind die 60° entsprechend abzuändern. Insbesondere bei n Phasen beträgt die Phasenverschiebung zwischen den Phasen 360°/n und das Zeitintervall 180°/n.

In einer vorteilhaften Weiterbildung werden die Datensignale nach dem AS-Interface-Protokoll oder dem CAN-Protokoll oder im OFDM-Verfahren übertragen. Von Vorteil ist dabei, dass die Erfindung in einem weiten Bereich industrieller Anwendungen einsetzbar ist, die standardisierte Verfahren oder Protokolle zur Datenübertragung einsetzen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Vorzugsweise sind die Bezeichnungen Schwellwert, Spitzenwert Leistungssignal und Datensignal in dieser Schrift bezogen auf Spannungswerte oder Stromwerte.

### Bezugszeichenliste

- 1: Leistungssignal
- 2: Datensignal
- 3: Stromverlauf
- 4: Zwischenkreisspannung
- 5: Datensignal
- 6: Strecke
- 7: Last
- 8: Phasenschalter
- 9: Koppelelement
- 10: Koppelelement
- 11: Synchronisationspuls
- 21: Zeitabschnitt
- L1, L2, L3: Netzphasen
- 40: Verbraucher
- 41: Primärleiter
- 42: Sekundärspulen
- 43: Mittel zum Gleichrichten
- 44: Puffer, elektrischer Energiespeicher
- 45: Leistungssignal
- 46: Unterbrechung des Leistungssignals
- 47: Datensignal
- 48: Master
- 49: Koppelelement
- 50: Synchronisationsleitung
- 51: Schaltelement
- 52: Slave
- 53: Konstantstromquelle
- 54: Leistungsversorgung
- 55: Strommessmittel
- 56: Lücke

Die Erfindung wird nun anhand von Abbildungen näher erläutert:

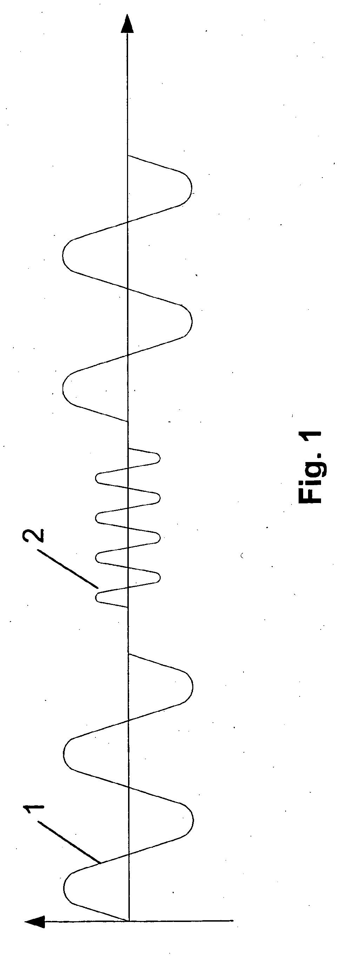

In der Figur 1 ist eine erfindungsgemäßes Prinzip gekennzeichnet. Dabei ist das Leistungssignal in einem Zeitabschnitt unterbrochen. Dies wird genutzt zur Datenübertragung mittels des Datensignals 2.

Der Zeitabschnitt für die Datenübertragung beträgt ein Vielfaches, insbesondere ein ganz- oder halbzahliges oder ein mehr als zehnfaches, der Periodendauer des Leistungssignals.

In der Figur 3 ist ein erfindungsgemäße Vorrichtung gezeigt, bei der die Netzphasen L1, L2, L3 an einen Phasenschalter 8 angeschlossen sind, der beispielhaft aus Thyristoren aufgebaut ist. Es sind aber in anderen erfindungsgemäßen Ausführungsbeispielen andere Halbleiterschalter verwendbar, wobei jede Phase einzeln abtrennbar ist.

Auf die von dem Phasenschalter 8 versorgte Strecke 6 wird mittels des Koppelelementes 9, das mittels eines Synchronisationspulses 11 synchronisiert ist, hochfrequent ein Datenstrom dann aufmoduliert, wenn das Leistungssignal unterbrochen ist. Hierzu werden die Schalter 8 synchron zur Hochfrequenzaufmodulation betrieben.

Die Zeitabschnitte, in denen das Leistungssignal unterbrochen ist, sind bei diesem Ausführungsbeispiel kürzer als eine Halbwelle des Leistungssignals. Außerdem sind diese Zeitabschnitte jeweils im Bereich der Nulldurchgänge des Leistungssignals angeordnet.

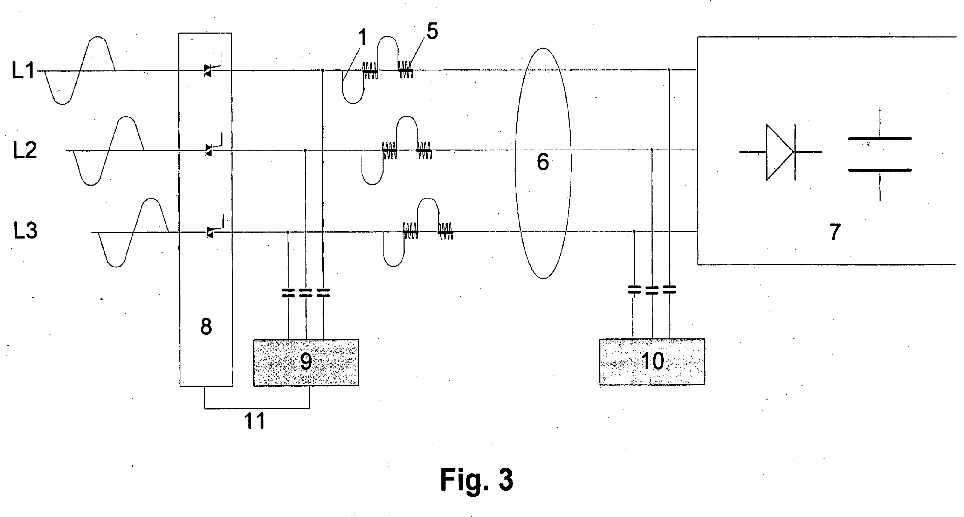

Das Leistungssignal 1 und Datensignal 5 ist in Figur 3 eingezeichnet. Dort handelt es sich zwar um eine dreiphasige Ausführung der Strecke 6 der Versorgung. Jedoch sind auch einphasige oder mehrphasige Systeme in analoger Weise ausstattbar.

In Figur 3 ist auch eine 120° Phasenverschiebung zwischen den Signalen der drei Phasen zeichnerisch angedeutet.

Am Ende der Strecke vor oder im Verbraucher ist ein weiteres Koppelement 10 angeordnet, das eine Demodulation der hochfrequent aufmodulierten Daten ausführbar macht.

Der Verbraucher ist als Last 7 nur symbolisch angedeutet. Beispielsweise handelt es sich hierbei um einen Umrichter oder ein anderes elektronisches Gerät, das eine Steuerung umfasst.

Diese Steuerung ist mit dem Koppelelement 10 zum Datenaustausch verbunden.

Der Verbraucher ist als Umrichter ausgeführt und umfasst insbesondere einen Gleichrichter, einen Zwischenkreis und eine Wechselrichter-Leistungsstufe eines Umrichters, wobei der Gleichrichter den Zwischenkreis versorgt und der Zwischenkreis einen Zwischenkreiskondensator aufweist zur Glättung des gleichgerichteten Leistungssignals und zur Pufferung von Leistungsschwankungen. Der Zwischenkreis dient daher als Energiepuffer bei der Versorgung der Last 7.

Die Pufferkapazität ist dabei derart klein wählbar, dass nur für die Zeitdauer einer Halbwelle abgepuffert wird, also der nachgeordnete Verbraucher versorgbar ist.

Beträgt die Zwischenkreisspannung einen von Null verschiedenen Wert, so ist bei einem sinusförmigen Leistungssignal nicht die volle Periode, sondern nur ein Teil jeder Halbwelle zum Aufladen des Zwischenkreises nutzbar.

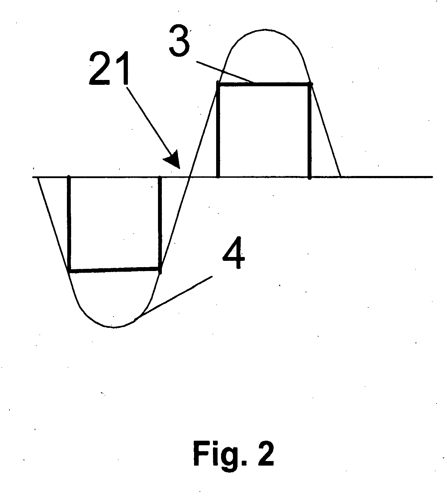

Diesen Anteil zeigt Fig. 2 für eine volle Periode des Leistungssignals. Dargestellt ist der Spannungsverlauf des Leistungssignals. Nur wenn der Momentan-Spannungswert des Leistungssignals 7 über dem Momentan-Spannungswert 3 im Zwischenkreis liegt, ist der Zwischenkreis über den Gleichrichter aufladbar. Die außerhalb dieses Abschnitts liegenden Zeitabschnitte 21 des Leistungssignals sind zur Versorgung der Last verzichtbar und somit zur Datenübertragung nutzbar.

Die für die Leistungsversorgung verzichtbaren Abschnitte werden in Weiterbildungen durch Phasenanschnittsteuerung oder Phasenabschnittsteuerung leistungsfrei geschaltet, insbesondere über einen Phasenschalter 8.

In einer Weiterbildung werden über die Strecke 6 mehrere Verbraucher versorgt, die jeweils über ein Koppelelement 10 Datensignale mit der Strecke 6 austauschen können. Das Grundprinzip der Erfindung ist auf eine Vielzahl von Verbrauchern und verschiedene Netze übertragbar. Die Einkopplung der Datensignale auf die Strecke 6 kann beispielsweise galvanisch, induktiv, kapazitiv oder optisch erfolgen.

Bei einem alternativen Ausführungsbeispiel wird am Phasenschalter 8 die von dem Verbraucher oder den Verbrauchern bezogene Leistung ermittelt und das Leistungssignal, vorzugsweise über eine Schwingungspaketsteuerung, zeitweise unterbrochen, um Zeitabschnitte für Datenübertragung bereitzustellen.

Besonders vorteilhaft ist die Summe der Zeitdauern eines Zeitabschnitts für Datensignale und des darauffolgenden Zeitabschnitts für das Leistungssignal jeweils konstant, und es wird je nach Leistungsbedarf das relative Verhältnis der beiden Abschnitte variiert. Dabei wird der Zeitabschnitt für Datensignale über einer Mindestdauer gehalten, die für die Übertragung einer kleinsten Informationsmenge nötig ist.

Beispielsweise ist eine Last 7 als Antrieb eines Transportfahrzeuges oder eines Hängewagens einer Einschienen-Hängebahn ausgebildet, der beim Anfahren einen höheren Leistungsbedarf hat und bei gleichförmiger Bewegung einen reduzierten Leistungsbedarf hat. In diesem Fall sind während des erhöhten Leistungsbedarfs innerhalb der auf eine Mindestmaß reduzierten Abschnitte für Datensignale einfache Kommandos und/oder Informationen, etwa zur Positionsbestimmung, austauschbar, während bei gleichförmiger Bewegung zusätzlich umfangreiche Datenpakete, wie Parametersätze und/oder Zustandsinformationen, austauschbar sind.

In einer Weiterbildung wird der Zeitpunkt und/oder die Zeitdauer dieser Zeitabschnitte über Synchronisationspulse 10 an das Koppelelement 9, das vorzugsweise als Bus-Master der Datenübertragung ausgebildet ist, übermittelt und/oder es wird Information über Zeitpunkt und/oder Zeitdauer dieser Zeitabschnitte über die Strecke 6 an die Verbraucher, insbesondere als Pulse an die Koppelelemente 9 und/oder 10, gesendet.

Zur Übertragung der Information und/oder Daten sind alle dem Nachrichtentechniker bekannten Verfahren zur Signalübermittlung einsetzbar. Insbesondere ist das Signal zur Übertragung von Daten frequenzmoduliert und/oder amplitudenmoduliert und/oder phasenmoduliert und/oder im OFDM-Verfahren kodiert. Die Datenübertragung ist nach dem AS-Interface-Busprotokoll oder dem CAN-Busprotokoll oder einem anderen Busprotokoll durchführbar. Vorteilhaft sind für die Signalübertragung Frequenzen verwendbar, die nicht wesentlich über der Frequenz des Leistungssignals liegen. Insbesondere sind Frequenzen unterhalb 300kHz, insbesondere 150kHz, einsetzbar. Somit ist eine Beeinträchtigung des allgemeinen Funkverkehrs durch die Datenübertragung vermeidbar.

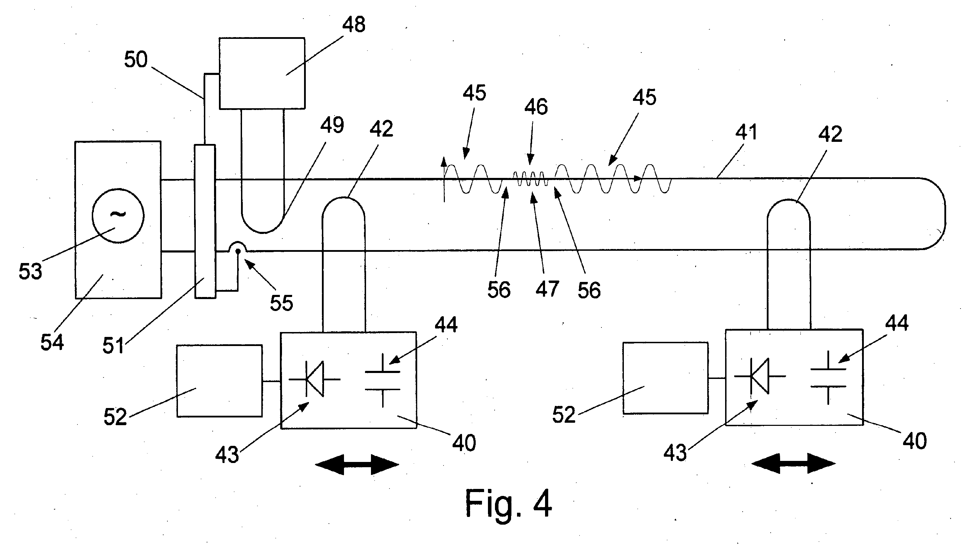

Figur 4 zeigt ein weiteres erfindungsgemäßes Ausführungsbeispiel. Ein Verbraucher oder mehrerer Verbraucher, werden über ein Versorgungsleitung, einen Primärleiter 41, induktiv versorgt. Dazu weist eine Leistungsversorgung 54 eine Konstantstromquelle 53 auf, die einen Strom konstanter Amplitude und Frequenz, Leistungssignal 45 genannt, auf einen Primärleiter 41 aufprägt. Die Verbraucher 40 sind über Sekundärspulen 42 induktiv an den Primärleiter 41 schwach gekoppelt. Es handelt sich also bei dem Ausführungsbeispiel um ein System mit berührungsloser Energieversorgung. Dabei ist sekundärseitig, also an den Sekundärspulen 42, eine Kapazität seriell oder parallel derart geschaltet, dass eine Resonanzfrequenz festgelegt ist, die mit der Frequenz des eingeprägten Primärleiterstroms, also dem Leistungssignal 45, übereinstimmt. Vorteilhaft wird als Leistungssignal 45 eingeprägter Strom mit einer Stromstärke von 10A oder mehr, z.B. 60A oder 100A, und mit einer Frequenz von 10 kHz bis 100 kHz, z.B. 20kHz oder 25 kHz, verwendet.

Die Verbraucher 40 sind somit entlang des Primärleiters 41 beweglich.

Die Verbraucher 40 verfügen jeweils über Mittel zum Gleichrichten 43 und einen. Puffer 44 zur Zwischenspeicherung elektrischer Energie. Die Puffer 44 sind als Kondensatoren ausgebildet, wobei die Kapazität so bemessen ist, dass eine primärseitige Unterbrechung des Leistungssignals 45 für einige Halbwellen ausgleichbar ist.

Vorteilhaft sind für die Signalübertragung Frequenzen verwendbar, die nicht wesentlich über der Frequenz des Leistungssignals 45 liegen. Insbesondere sind Frequenzen unterhalb 150 kHz einsetzbar. Somit ist das Ausbreitungsverhalten des Datensignals 47, insbesondere die Dämpfungsrate, im Wesentlichen gleich dem des Leistungssignals.

Durch ein Schaltelement 51 kann der Stromfluss von der Leistungsversorgung 54 an den Primärleiter 41 unterbrochen werden. Das Schaltelement 51 umfasst dazu Thyristoren, mit denen eine Phasenanschnittsteuerung oder eine Schwingungspaketsteuerung realisiert ist.

Figur 4 zeigt einen beispielhaften zeitlichen Signalverlauf auf dem Primärleiters 41. Das Leistungssignal 45 ist in einem Abschnitt 46 unterbrochen. In diesem Bereich 46 sind Datensignale 47 übertragbar. Diese Datensignale sind in der Figur nur schematisch angedeutet, sie tragen Informationen nach dem AS-Interface-Protokoll. Alternative Protokolle oder Verfahren, beispielsweise das CAN-BUS-Protokoll, das OFDM-Verfahren oder ein anderes Bus-Protokoll oder Übertragungs-Verfahren, sind einsetzbar.

Vorzugsweise sind zwischen den Zeitabschnitten für Leistungssignal 45 und den Zeitabschnitten für Datensignale 47 zusätzliche, zeitliche Lücken 56 vorgesehen, in denen gar kein Signal übertragen wird. Somit werden eventuell bei Kabelbrüchen oder unbeabsichtigtem Auftrennen des Primärleiters 41 sich ausbildende Lichtbögen sicher gelöscht.

Alternativ ist jeder n-te, wobei n eine natürliche Zahl bezeichnet, insbesondere jeder zehnte oder jeder hunderste Zeitabschnitt für Datensignale nicht mit einem Datensignal beaufschlagt, oder es bleiben Zeitabschnitte für Datensignale nach einem anderen, beispielsweise unregelmäßigen, zufälligen, Muster signalfrei. Durch die unregelmäßige Anordnung der Abschnitte 46 sind Resonanzen vorteilhaft vermeidbar.

Leistungssignal 45 und Datensignal 47 sind in dem Ausführungsbeispiel nach Fig. 4 über eine schematisch gezeigte, gemeinsame Sekundärspule 42 auskoppelbar. Datenübertragungsfehler durch Übersteuerung durch ein zu starkes Leistungssignal 45 als Hintergrund des Datensignals 47 sind durch die abwechselnde Nutzung des Primärleiters 41 sicher vermeidbar. Aufwendige Filtertechnik, insbesondere in den beweglichen Verbrauchern 40, zur Trennung von Datensignal 47 und Leistungssignal 45 ist somit verzichtbar.

Die Einkopplung und Auskopplung der Datensignale erfolgt induktiv, also durch Regeln bzw. Erfassen der zugehörigen Stromstärke. Bei alternativen Ausführungsbeispielen erfolgt die Einkopplung kapazitiv durch Regeln der zum Datensignal gehörenden Spannung.

Im Ausführungsbeispiel nach Fig. 4 sind weiter Mittel zur Erfassung der durch die Verbraucher 40 von der Leistungsversorgung 54 bezogenen Leistung vorgesehen. Dazu erfasst ein Strommessmittel 55 die im Primärleiter fließende Stromstärke, und es ist im Schaltelement ein Spannungsmessmittel integriert. Eine vorzugsweise im Schaltelement integrierte Elektronik ermittelt aus den Messwerten zeitliche Mittelwerte der bezogenen Leistung, vorzugsweise bezüglich eines fest gewählten Zeitfensters.

Anhand der momentan oder in einem Zeitfenster im Mittel bezogenen Leistung berechnet eine vorzugsweise in dem Schaltelement 51 angeordnete Elektronik, wie oft und wie lange jeweils die Leistungsversorgung unterbrochen werden kann, ohne die Leistungsversorgung der Verbraucher 40 zu beeinträchtigen. Somit wird die zeitliche Länge der Abschnitte 46 sowie deren zeitliche Häufigkeit dem momentanen Leistungsbedarf der Verbraucher 40 am Primärleiter 41 angepasst.

Das Schaltelement 51 ist über eine Synchronisationsleitung 50 mit dem Master 48 eines AS-Interface-Bussystems verbunden. Über die Synchronisationsleitung 50 werden von der Elektronik im Schaltelement 51 Informationen über den Zeitpunkt und vorzugsweise über die Länge des nächsten Abschnitts 46 der Unterbrechung des Leistungssignals übergeben. Somit ist der Master 48 in der Lage, die Kommunikation mit den Slaves 52 an den Verbrauchern 40 zu planen, insbesondere deren zeitliche Abfolge und deren Datenumfang. Der Master 48 beaufschlagt ein Koppelelement 49 mit Datensignalen, die induktiv oder alternativ kapazitiv auf den Primärleiter eingekoppelt werden zur Kommunikation mit den Verbrauchern 40.

Vorzugsweise werden die Abschnitte 46 der Unterbrechung des Leistungssignals so von der Elektronik des Schaltelements 51 festgelegt, dass innerhalb eines Abschnitts 46 der Master 48 mindestens einen Slave 52 aufrufen und von diesem eine Antwort erhalten kann. Somit weisen die Abschnitte 46 eine zeitliche Mindestlänge auf, die sich aus den Zykluszeiten des Bussystems ergibt.

Die Pufferkapazität ist derart mit der maximal erlaubten Zeitdauer eines Abschnitts 46 abgestimmt, dass nur für die maximale Zeitdauer eines Abschnitts 46 die Leistungsunterbrechung abgepuffert wird, also der nachgeordnete Verbraucher 40 versorgbar ist.

Bei der alternativen Verwendung anderer Datenübertragungsverfahren ergibt sich die Mindestlänge der Abschnitte 46 aus anderen Rahmenbedingungen, beispielsweise im OFDM-Verfahren durch die Symboldauer oder im CAN-Protokoll durch Adressierung und Nutzdatenübertragung.

Bei einer vorteilhaften Weiterbildung umfasst das Schaltelement 51 Mittel zum Senden von Signalen, insbesondere bursts, die den Beginn eines Abschnitts 46 und/oder die Länge des nächstfolgenden Abschnitts 46 beschreiben. Beispielsweise ist durch eine Anzahl von bursts markierbar, dass der nun folgende Abschnitt 46 eine zeitliche Länge aufweist, die sich aus der übermittelten Anzahl von Elementarabschnitten zusammensetzt.

## Patentansprüche

1. Anlage oder Vorrichtung,
umfassend eine Leistungsversorgung
und umfassend wenigstens einen über eine Versorgungsleitung versorgten Verbraucher (40), wobei über die Versorgungsleitung elektrische Leistung mit einem Leistungssignal (1) und Daten mit einem Datensignal (2) übertragbar sind,
wobei der Verbraucher (40) induktiv versorgt ist von der Versorgungsleitung,
wobei hierzu der Verbraucher (40) eine Sekundärspule umfasst,
die induktiv angekoppelt ist an die Versorgungsleitung,
wobei in die Versorgungsleitung aus einer Konstantstromquelle (53) ein mittelfrequenter Strom mit einer Stromstärke von wenigstens 10A und einer konstanten Frequenz von 10kHz bis 100kHz als Leistungssignal (1) eingeprägt ist,
**dadurch gekennzeichnet, dass**
Leistungssignal (1) und Datensignal (2) abwechselnd übertragbar sind,
dass ein Schalter (51) zum zeitweisen Abschalten des Leistungssignals (1) vorgesehen ist, wobei das Datensignal (2) auf die Versorgungsleitung nach dem Abschalten aufmoduliert ist, und dass zwischen einem Zeitabschnitt für Datensignale (2) und einem sich jeweils anschließenden Zeitabschnitt für das Leistungssignal (1) jeweils in regelmäßigen zeitlichen Abständen ein Zeitabschnitt vorgesehen ist, in dem weder Datensignale (2) noch Leistungssignale (1) vorgesehen sind.

2. Anlage oder Vorrichtung nach Anspruch 1,
**dadurch gekennzeichnet, dass**
der maximale Wert der Stromstärke der Leistungssignale (1) ein Vielfaches, insbesondere mehr als ein Zehnfaches, des maximalen Wertes der Stromstärke der Datensignale (2) beträgt,
insbesondere wobei der wenigstens eine Verbraucher (40) einen Energiepuffer (44) aufweist, der aus der Versorgungsleitung speisbar, vorzugsweise in Form eines Zwischenkreises eines Frequenzumrichters, ist,
wobei vorzugsweise die Größe des Energiepuffers (44) so bemessen ist, dass die Versorgung der nachgeordneten Verbraucher (40) für die Zeit der zeitabschnittsweisen Trennung des Leistungssignals (1) sichergestellt ist.

3. Anlage oder Vorrichtung nach einem der vorangegangenen Ansprüche,
umfassend einen oder mehrere über eine Versorgungsleitung versorgten Verbraucher (40), wobei die Verbraucher (40) Mittel zur Kommunikation über die Versorgungsleitung umfassen und eine Schalteinheit vorgesehen ist zur Trennung der Versorgungsleitung von der Leistungsversorgung.

4. Anlage oder Vorrichtung nach einem der vorangegangenen Ansprüche,
**dadurch gekennzeichnet, dass**
die Verbraucher (40) jeweils einen Energiepuffer (44) aufweisen, der aus der Versorgungsleitung speisbar ist, insbesondere in Form eines Zwischenkreises eines Frequenzumrichters,
insbesondere wobei
die Größe des Energiepuffers (44) so bemessen ist, dass die Versorgung der nachgeordneten Verbraucher (40) für die Zeit der zeitabschnittsweisen Trennung des Leistungssignals (1) sichergestellt ist.

5. Anlage oder Vorrichtung nach einem der vorangegangenen Ansprüche,
**dadurch gekennzeichnet, dass**
die Schalteinheit Mittel zur Erfassung der von der Leistungsversorgung an die Verbraucher (40) momentan oder im zeitlichen Mittel innerhalb eines Zeitfensters übertragene Leistung umfasst, insbesondere durch Ermittlung des zeitlichen Verlaufs von Stromstärke und/oder Spannung in der Versorgungsleitung oder deren zeitlicher Mittelwerte und/oder durch Berechung des Leistungsverbrauchs anhand der von den Verbrauchern (40) durchgeführten Verfahrensschritten und/oder Aktionen,
und/oder
die Schalteinheit mit einer zentralen Kommunikationseinheit verbunden ist, insbesondere einem Master,
wobei die zentrale Kommunikationseinheit Mittel zur Kommunikation über die Versorgungsleitung mit den Verbrauchern (40) aufweist.

6. Anlage oder Vorrichtung nach einem der vorangegangenen Ansprüche,
**dadurch gekennzeichnet, dass**
sekundärseitig eine Kapazität derart seriell und/oder parallel zur Sekundärspule angeordnet ist, dass die dazugehörige Resonanzfrequenz mit der Frequenz des Leistungssignals (1) übereinstimmt,
und/oder
die Mittel zur Kommunikation der Verbraucher (40) jeweils an die Sekundärspule angeschlossen sind.

7. Anlage oder Vorrichtung nach einem der vorangegangenen Ansprüche,
**dadurch gekennzeichnet, dass**
das Leistungssignal (1) durch den zeitlichen Verlauf von Spannung, Stromstärke oder Leistung in der Versorgungsleitung bestimmt ist.

8. Anlage oder Vorrichtung nach einem der vorangegangenen Ansprüche,
**dadurch gekennzeichnet, dass**
bei verschwindendem Leistungssignal (1) oder in Zeitabschnitten, in welchen die Amplitude des Leistungssignals (1) kleiner als ein Schwellwert ist, ein Datensignal (2) übertragbar ist und/oder
der Schwellwert kleiner ist als die Hälfte des Spitzenwertes des Leistungssignals (1) der Versorgungsleitung.

9. Anlage oder Vorrichtung nach einem der vorangegangenen Ansprüche,
**dadurch gekennzeichnet, dass**
Mittel zur Filterung der Nutzdaten Mittel zum Amplitudenvergleich und/oder Frequenzvergleich umfassen
und/oder
die Daten entsprechend dem ASI-Verfahren übertragbar sind.

10. Anlage oder Vorrichtung nach einem der vorangegangenen Ansprüche,
**dadurch gekennzeichnet, dass**
der Verbraucher (40) elektrisch, insbesondere galvanisch, verbunden ist mit den Versorgungsleitungen
und/oder
die Versorgungsleitungen dreiphasig ausgeführt sind,
wobei jeder Verbraucher (40) zur Kommunikation mit jeder Phase verbunden ist und/oder
als Koppelelement ein Phasenmultiplexer und/oder ein Phasendemultiplexer vorgesehen ist, mittels welchem ein unterbrechungsfreies Datenübertragen ausführbar wird.

11. Verfahren zur Datenübertragung bei einer Anlage
wobei ein Leistungssignal (1) aus einer Konstantstromquelle mit einer Stromstärke von wenigstens 10A und einer Frequenz von 10kHz bis 100kHz in eine Versorgungsleitung zur Versorgung eines Verbrauchers (40) gespeist wird,
wobei der Verbraucher (40) induktiv versorgt wird von der Versorgungsleitung,
wobei hierzu der Verbraucher (40) eine Sekundärspule umfasst,
die induktiv angekoppelt ist an die Versorgungsleitung,
**dadurch gekennzeichnet, dass**
über die Versorgungsleitung das Leistungssignal (1) und ein Datensignal (2) abwechselnd übertragen werden,
wobei das Leistungssignal (1) zeitabschnittsweise abgeschaltet wird zur Übertragung des Datensignals (2)
und das Leistungssignal (1) und Datensignal (2) derart synchronisiert sind, dass nur entweder ein Leistungssignal (1) oder ein Datensignal (2) übertragen wird,
und dass zwischen einem Zeitabschnitt für Datensignale (2) und einem sich jeweils anschließenden Zeitabschnitt für das Leistungssignal (1) jeweils in regelmäßigen zeitlichen Abständen ein Zeitabschnitt vorgesehen ist, in dem weder Datensignale (2) noch Leistungssignale (1) vorgesehen sind.

12. Verfahren nach dem vorangegangenen Anspruch,
**dadurch gekennzeichnet, dass**
der maximale Wert der Stromstärke der Leistungssignale (1) ein Vielfaches, insbesondere mehr als ein Zehnfaches, des maximalen Wertes der Stromstärke der Datensignale (2) beträgt.

13. Verfahren nach einem der vorangegangenen Ansprüche,
**dadurch gekennzeichnet, dass**
die von den Verbrauchern über die Versorgungsleitung bezogene Leistung bestimmt wird, insbesondere die momentan oder innerhalb eines Zeitfensters im Mittel bezogene,
und/oder
die Länge der Zeitabschnitte für Datensignale (2) und/oder der Abstand zwischen den Zeitabschnitten für Datensignale (2) durch die von den Verbrauchern momentan bezogene Leistung bestimmt ist
und/oder
die Länge der Zeitabschnitte ein Mindestmaß beträgt, wenn der Leistungsbedarf der Verbraucher über einem Schwellwert liegt, und dass die Länge der Zeitabschnitte größer als das Mindestmaß ist, wenn der Leistungsbedarf darunter liegt, wobei das Mindestmaß durch die Zeitspanne bestimmt ist, innerhalb derer der Master einen vollen Kommunikationszyklus mit einem Verbraucher abwickelbar ist
und/oder
zur Löschung von Lichtbögen in Anlagen mit berührungsloser Leistungsversorgung zwischen dem Zeitabschnitt für Datensignale (2) und dem sich jeweils anschließenden Zeitabschnitt für das Leistungssignal (1) jeweils in regelmäßigen zeitlichen Abständen ein Zeitabschnitt vorgesehen ist, in dem weder Datensignale noch Leistungssignale (1) vorgesehen sind, und/oder
die Zeitabschnitte für Datensignale (2) durch Pulse auf der Versorgungsleitung gekennzeichnet werden
und/oder
die Pulse zur Kennzeichnung der Zeitabschnitte für Datensignale (2) Informationen enthalten, über welche Zeitdauer sich der gekennzeichnete Zeitabschnitt erstreckt,
insbesondere durch Angabe des Vielfachen eines Mindestmaßes.

14. Verfahren nach einem der vorangegangenen Ansprüche,
**dadurch gekennzeichnet, dass**
die Versorgungsleitung mehrere Phasen umfasst, die jeweils zu unterschiedlichen Zeitpunkten derart von der Leistungsversorgung getrennt werden, dass sich die jeweiligen Zeitabschnitte für Datensignale (2) zur Bildung eines kontinuierlichen Kommunikationskanals zeitlich aneinander reihen
und/oder
bei einer dreiphasigen Versorgungsleitung, insbesondere Drehstromleitung, die Leistungssignale (1) der drei Phasen um 120° gegeneinander verschoben sind, wobei im Bereich jedes Nulldurchgangs für ein Zeitintervall das jeweilige Leistungssignal (1) abgeschaltet wird
und/oder
das Zeitintervall 60° beträgt, insbesondere zur Ermöglichung einer unterbrechungsfreien Datenübertragung.

15. Verfahren nach einem der vorangegangenen Ansprüche,
**dadurch gekennzeichnet, dass**
die Datensignale (2) nach dem AS-Interface-Protokoll oder dem CAN-Protokoll oder im OFDM-Verfahren übertragen werden.

## Claims

1. System or device,
comprising a power supply
and comprising at least one consumer (40) supplied via a supply line,
wherein electrical power is transmittable with a power signal (1) and data is transmittable with a data signal (2) via the supply line,
wherein the consumer (40) is inductively supplied by the supply line,
wherein the consumer (40) comprises a secondary coil for this purpose,
which is inductively coupled to the supply line,
wherein a medium-frequency current with a current intensity of at least 10 A and a constant frequency of 10 kHz to 100 kHz is applied as power signal (1) to the supply line from a constant current source (53),
**characterised in that**
power signal (1) and data signal (2) are alternately transmittable,
**in that** a switch (51) is provided for the intermittent switching-off the power signal (1), the data signal (2) being modulated upon the supply line after the switching-off,
and **in that** a time segment, in which neither data signals (2) nor power signals (1) are provided, is in each case provided at regular temporal intervals between a time segment for data signals (2) and a respectively following time segment for the power signal (1).

2. System or device according to Claim 1,
**characterised in that**
the maximum value of the current intensity of the power signals (1) is a multiple of, in particular more than ten times, the maximum value of the current intensity of the data signals (2),
in particular wherein the at least one consumer (40) has an energy buffer (44), which is suppliable from the supply line, preferably in the form of an intermediate circuit of a frequency converter,
wherein preferably the size of the energy buffer (44) is dimensioned such that the supply of the downstream consumers (40) is ensured for the time of the periodic disconnection of the power signal (1).

3. System or device according to one of the preceding claims, comprising one or more consumers (40) supplied via a supply line, the consumers (40) comprising means for communicating via the supply line and a switching unit being provided for disconnecting the supply line from the power supply.

4. System or device according to one of the preceding claims, **characterised in that**
the consumers (40) each have an energy buffer (44) which is suppliable from the supply line, in particular in the form of an intermediate circuit of a frequency converter,
in particular wherein
the size of the energy buffer (44) is dimensioned such that the supply of the downstream consumers (40) is ensured for the time of the periodic disconnection of the power signal (1).

5. System or device according to one of the preceding claims, **characterised in that**
the switching unit comprises means for detecting the power transmitted by the power supply to the consumers (40) at the present moment or on average over time within a time window, in particular by ascertaining the time characteristic of the current intensity and/or voltage in the supply line or their time averages and/or by calculating the power consumption on the basis of the process steps and/or actions performed by the consumers (40),
and/or
the switching unit is connected to a central communication unit, in particular a master,
wherein the central communication unit has means for communicating with the consumers (40) via the supply line.

6. System or device according to one of the preceding claims, **characterised in that**
on the secondary side a capacitor is arranged in series and/or in parallel with the secondary coil such that the associated resonant frequency matches the frequency of the power signal (1),
and/or
the means for communication of the consumers (40) are each connected to the secondary coil.

7. System or device according to one of the preceding claims, **characterised in that**
the power signal (1) is determined by the time characteristic of voltage, current intensity or power in the supply line.

8. System or device according to one of the preceding claims, **characterised in that**
in the event of a vanishing power signal (1) or in time segments in which the amplitude of the power signal (1) is less than a threshold value, a data signal (2) is transmittable
and/or
the threshold value is less than half of the peak value of the power signal (1) of the supply line.

9. System or device according to one of the preceding claims, **characterised in that**
means for filtering the useful data comprise means for amplitude comparison and/or frequency comparison and/or
the data are transmittable in accordance with the ASI method.

10. System or device according to one of the preceding claims, **characterised in that**
the consumer (40) is connected electrically, in particular galvanically, to the supply lines
and/or
the supply lines have a three-phase design,
wherein each consumer (40) is connected to each phase for communication
and/or
as the coupling element, a phase multiplexer and/or a phase demultiplexer is provided, by means of which an uninterrupted data transmission is realisable.

11. Method for data transmission in a system
wherein a power signal (1) is fed from a constant current source with a current intensity of at least 10 A and a frequency of 10 kHz to 100 kHz into a supply line for supplying a consumer (40),
wherein the consumer (40) is inductively supplied by the supply line,
wherein the consumer (40) comprises a secondary coil for this purpose,
which is inductively coupled to the supply line, **characterised in that**
the power signal (1) and a data signal (2) are alternately transmittable via the supply line,
wherein the power signal (1) is periodically switched off in order to transmit the data signal (2)
and the power signal (1) and data signal (2) are synchronised such that only either a power signal (1) or a data signal (2) is transmitted,
and **in that** a time segment, in which neither data signals (2) nor power signals (1) are provided, is in each case provided at regular temporal intervals between a time segment for data signals (2) and a respectively following time segment for the power signal (1).

12. Method according to the preceding claim,
**characterised in that**
the maximum value of the current intensity of the power signals (1) is a multiple of, in particular more than ten times, the maximum value of the current intensity of the data signals (2).

13. Method according to one of the preceding claims, **characterised in that**
the power drawn by the consumers via the supply line is determined,
in particular the power drawn at the present moment or within a time window on average,
and/or
the length of the time segments for data signals (2) and/or the interval between the time segments for data signals (2) is determined by the power drawn at the present moment by the consumers
and/or
the length of the time segments is at a minimum if the power requirement of the consumers is above a threshold value, and **in that** the length of the time segments is greater than the minimum if the power requirement is below the threshold value, the minimum being determined by the time span within which the master is processable [sic] a full communication cycle with a consumer
and/or
a time segment, in which neither data signals nor power signals (1) are provided, is respectively provided at regular temporal intervals between the time segment for data signals (2) and the respectively following time segment for the power signal (1), in order to extinguish arcs in systems having a contactless power supply,
and/or
the time segments for data signals (2) are marked by pulses on the supply line
and/or
the pulses for marking the time segments for data signals (2) contain information regarding the duration over which the marked time segment extends, in particular by indicating the multiple of a minimum.

14. Method according to one of the preceding claims, **characterised in that**
the supply line comprises a plurality of phases, which are each disconnected at different times from the power supply such that the respective time segments for data signals (2) succeed one another in time for forming a continuous communication channel
and/or
in a three-phase supply line, in particular a three-phase-current line, the power signals (1) of the three phases are shifted by 120° with respect to one another, the respective power signal (1) being switched off for a time interval in the area of each zero crossing
and/or
the time interval is 60°, in particular so as to enable an uninterrupted data transmission.

15. Method according to one of the preceding claims,
**characterised in that**
the data signals (2) are transmitted in accordance with the AS interface protocol or the CAN protocol or in the OFDM method.

## Revendications

1. Installation ou dispositif,
comprenant une alimentation de puissance
et comprenant au moins un consommateur (40) alimenté par une ligne d'alimentation, la ligne d'alimentation permettant la transmission d'une puissance électrique au moyen d'un signal de puissance (1) et de données au moyen d'un signal de données (2),
le consommateur (40) étant alimenté par la ligne d'alimentation par induction,
le consommateur (40) comprenant à cet effet une bobine secondaire,
qui est couplée par induction à la ligne d'alimentation,
un courant à moyenne fréquence d'une intensité d'au moins 10 A et d'une fréquence constante de 10 kHz à 100 kHz étant appliqué dans la ligne d'alimentation comme signal de puissance (1) à partir d'une source de courant constant (53),
caractérisé(e) en ce que
signal de puissance (1) et signal de données (2) peuvent être transmis alternativement,
qu'un commutateur (51) est prévu pour la coupure temporaire du signal de puissance (1), le signal de données (2) étant modulé sur la ligne d'alimentation après la coupure,
et qu'il est prévu entre une tranche de temps pour les signaux de données (2) et une tranche de temps lui succédant pour le signal de puissance (1), chaque fois à intervalles de temps réguliers, une tranche de temps dans laquelle ni signaux de données (2) ni signaux de puissance (1) ne sont prévus.

2. Installation ou dispositif selon la revendication 1,
caractérisé(e) en ce que
la valeur maximale de l'intensité des signaux de puissance (1) est un multiple, en particulier plus du décuple, de la valeur maximale de l'intensité des signaux de données (2),
en particulier ledit au moins un consommateur (40) présentant une réserve d'énergie (44) qui peut être alimentée à partir de la ligne d'alimentation, de préférence sous la forme d'un circuit intermédiaire d'un convertisseur de fréquence,
la grandeur de la réserve d'énergie (44) étant de préférence dimensionnée de façon que l'alimentation des consommateurs (40) situés en aval soit assurée pendant la durée de la coupure par tranches de temps du signal de puissance (1).

3. Installation ou dispositif selon une des revendications précédentes,
comprenant un ou plusieurs consommateurs (40) alimentés par une ligne d'alimentation, les consommateurs (40) comprenant des moyens pour communiquer via la ligne d'alimentation et une unité de commutation étant prévue pour séparer la ligne d'alimentation de l'alimentation de puissance.

4. Installation ou dispositif selon une des revendications précédentes,
caractérisé(e) en ce que
les consommateurs (40) présentent chaque fois une réserve d'énergie (44) qui peut être alimentée à partir de la ligne d'alimentation, en particulier sous la forme d'un circuit intermédiaire d'un convertisseur de fréquence,
la grandeur de la réserve d'énergie (44) étant en particulier dimensionnée de façon que l'alimentation des consommateurs (40) situés en aval soit assurée pendant la durée de la coupure par tranches de temps du signal de puissance (1).

5. Installation ou dispositif selon une des revendications précédentes,
caractérisé(e) en ce que
l'unité de commutation comprend des moyens pour détecter la puissance transmise par l'alimentation de puissance aux consommateurs (40) à un moment donné ou en moyenne à l'intérieur d'une fenêtre de temps, en particulier par détermination de la variation dans le temps de l'intensité et/ou de la tension dans la ligne d'alimentation ou de leurs moyennes dans le temps et/ou par calcul de la consommation de puissance à l'aide des étapes de procédé et/ou des actions exécutées par les consommateurs (40), et/ou
l'unité de commutation est reliée à une unité centrale de communication, en particulier un maître,
l'unité centrale de communication présentant des moyens pour communiquer avec les consommateurs (40) via la ligne d'alimentation.

6. Installation ou dispositif selon une des revendications précédentes,
caractérisé(e) en ce que
côté secondaire, une capacité est disposée en série et/ou en parallèle avec la bobine secondaire de façon que la fréquence de résonance correspondante coïncide avec la fréquence du signal de puissance (1),
et/ou
les moyens de communication des consommateurs (40) sont chaque fois connectés à la bobine secondaire.

7. Installation ou dispositif selon une des revendications précédentes,
caractérisé(e) en ce que
le signal de puissance (1) est déterminé par la variation dans le temps de la tension, de l'intensité ou de la puissance dans la ligne d'alimentation.

8. Installation ou dispositif selon une des revendications précédentes,
caractérisé(e) en ce que
un signal de données (2) peut être transmis lorsque le signal de puissance (1) est extrêmement petit ou dans des tranches de temps dans lesquelles l'amplitude du signal de puissance (1) est inférieure à une valeur seuil,
et/ou
la valeur seuil est inférieure à la moitié de la valeur de crête du signal de puissance (1) de la ligne d'alimentation.

9. Installation ou dispositif selon une des revendications précédentes,
caractérisé(e) en ce que
des moyens de filtrage des données utiles comprennent des moyens de comparaison d'amplitudes et/ou de comparaison de fréquences
et/ou
les données peuvent être transmises conformément au procédé ASI.

10. Installation ou dispositif selon une des revendications précédentes,
caractérisé(e) en ce que
le consommateur (40) est relié électriquement, en particulier galvaniquement, aux lignes d'alimentation
et/ou
les lignes d'alimentation sont triphasées,
chaque consommateur (40) étant relié à chaque phase pour la communication et/ou
un multiplexeur de phases et/ou un démultiplexeur de phases est prévu comme élément de couplage, au moyen duquel une transmission de données sans interruption est réalisable.

11. Procédé de transmission de données dans une installation
dans lequel un signal de puissance (1) provenant d'une source de courant constant, d'une intensité d'au moins 10 A et d'une fréquence de 10 kHz à 100 kHz, est injecté dans une ligne d'alimentation pour alimenter un consommateur (40),
le consommateur (40) étant alimenté par la ligne d'alimentation par induction,
le consommateur (40) comprenant à cet effet une bobine secondaire,
qui est couplée par induction à la ligne d'alimentation,
**caractérisé en ce que**
le signal de puissance (1) et un signal de données (2) sont transmis alternativement via la ligne d'alimentation,
le signal de puissance (1) étant coupé par tranches de temps pour la transmission du signal de données (2)
et le signal de puissance (1) et le signal de données (2) étant synchronisés de façon que seulement soit un signal de puissance (1), soit un signal de données (2) soit transmis,
et qu'entre une tranche de temps pour les signaux de données (2) et une tranche de temps lui succédant pour le signal de puissance (1), il est prévu, chaque fois à intervalles de temps réguliers, une tranche de temps dans laquelle ne sont prévus ni signaux de données (2) ni signaux de puissance (1).

12. Procédé selon une des revendications précédentes,
**caractérisé en ce que**
la valeur maximale de l'intensité des signaux de puissance (1) est un multiple, en particulier plus du décuple, de la valeur maximale de l'intensité des signaux de données (2).

13. Procédé selon une des revendications précédentes,
**caractérisé en ce que**
la puissance consommée par les consommateurs via la ligne d'alimentation est déterminée, en particulier la puissance consommée à un moment donné ou en moyenne à l'intérieur d'une fenêtre de temps,
et/ou
la longueur des tranches de temps pour les signaux de données (2) et/ou la distance entre les tranches de temps pour les signaux de données (2) est déterminée par la puissance consommée par les consommateurs à un moment donné et/ou
la longueur des tranches de temps a une valeur minimale lorsque le besoin en puissance des consommateurs est supérieur à une valeur seuil, et la longueur des tranches de temps est supérieure à la valeur minimale lorsque le besoin en puissance est inférieur, la valeur minimale étant déterminée par le laps de temps pendant lequel le maître peut exécuter un cycle de communication complet avec un consommateur et/ou
pour éteindre les arcs électriques dans des installations dotées d'une alimentation de puissance sans contact, il est prévu entre la tranche de temps pour les signaux de données (2) et la tranche de temps lui succédant pour le signal de puissance (1), chaque fois à intervalles de temps réguliers, une tranche de temps dans laquelle ni signaux de données (2) ni signaux de puissance ne sont prévus,
et/ou
les tranches de temps pour les signaux de données (2) sont **caractérisées par** des impulsions sur la ligne d'alimentation
et/ou
les impulsions pour caractériser les tranches de temps pour les signaux de données (2) contiennent des informations sur la durée sur laquelle la tranche de temps caractérisée s'étend, en particulier par indication du multiple d'une valeur minimale.

14. Procédé selon une des revendications précédentes,
**caractérisé en ce que**
la ligne d'alimentation comprend plusieurs phases qui sont coupées de l'alimentation de puissance chaque fois à des instants différents, de façon que les tranches de temps respectives pour les signaux de données (2) se succèdent dans le temps pour former un canal de communication continu
et/ou
en cas de ligne d'alimentation triphasée, les signaux de puissance (1) des trois phases sont décalés de 120° les uns par rapport aux autres, le signal de puissance (1) respectif étant coupé pendant un intervalle de temps dans la zone de chaque passage par zéro et/ou
l'intervalle de temps est de 60°, en particulier pour permettre une transmission de données sans interruption.

15. Procédé selon une des revendications précédentes,
**caractérisé en ce que**
les signaux de données (2) sont transmis selon le protocole AS-Interface ou le protocole CAN ou selon le procédé OFDM.
